# NEW EUROPEAN PATENT SPECIFICATION

(11) **EP 0 145 781 B2**
(45) Date of publication and mention of the opposition decision: **07.04.1993**
(45) Mention of the grant of the patent: 23.09.1987
(21) Application number: 84902615.8
(22) Date of filing: 19.06.1984
(51) Int. Cl.: F16L 21/02

(54) **MEANS FOR SEALING THE GAP BETWEEN TWO AXIALLY DISPLACEABLE SEALING SURFACES**
VORRICHTUNG ZUM DICHTEN DES SPALTES ZWISCHEN ZWEI AXIAL VERSCHIEBBAREN DICHTUNGSFLÄCHEN
DISPOSITIF D'ETANCHEIFICATION DE L'ESPACE DEFINI ENTRE DEUX SURFACES D'ETANCHEITE DEPLACABLES AXIALEMENT

(30) Priority: 20.06.1983 NO 832235
(43) Date of publication of application: 26.06.1985
(60) Divisional application: 86201654.0
(73) Proprietor: Forsheda AB, S-330 12 Forsheda (SE)
(72) Inventor: HAALAND, Per, N-1152 Oslo 11 (NO)
(74) Representative: Linde, Leif
(86) International application number: PCT/NO84/00025
(87) International publication number: WO 85/00211

(56) References cited:
- DE-A- 1 609 088
- DE-B- 1 675 378
- DE-B- 2 325 231
- DE-B- 2 513 982
- DE-C- 720 239
- DE-C- 1 055 460
- FR-A- 1 545 368
- FR-A- 2 347 601
- JP-A- 493 884
- NO-B- 137 400
- NO-B- 141 001
- SE-B- 412 797
- US-A- 2 809 853
- US-A- 3 558 144
- US-A- 4 299 399

## Description

The present invention relates to a gasket according to the preamble of Claim 1.

A gasket of this kind is previously known from DE-C-1 055 460. Thus, this document shows and describes a gasket in the form of a sealing sleeve for connecting an outlet stud of a water closet with the socket of a sewer pipe. The gasket according to DE-C-1 055 460 has a substantially I-shaped cross-section in which the bars of the "I" form a sliding part and an attachment part respectively and the web forms a connection part extending substantially perpendicular to the axis of the sleeve and connecting the sliding part and the attachment part with each other. The sliding and attachment parts form with each other an angle of about 35° in the non-mounted condition of the gasket with the spacing between them increasing from the front end of the gasket towards the rear.

The object of the present invention is to provide a gasket of the type described above, which is improved in especially two respects. Thus, it is the object of the invention to provide a sealing gasket of the kind defined in the preamble of the main claim of the patent, which on the one hand is not deplaced from its correct position between the two sealing surfaces by the forces to which the gasket is subjected when the sealing surfaces are axially displaced to the jointed position in which the gasket is sealingly compressed between the sealing surfaces, and on the other hand can adapt to different widths of the gap between the sealing surfaces without causing the sealing pressure to be increased or decreased to an unacceptable value.

The correct position of the gasket during the jointing of the sealing surfaces shall be maintained also in the case that the sealing surfaces are in a somewhat eccentric position in relation to each other when being axially displaced so as to provide the joint. An eccentric position between the sealing surfaces during assembly means that the width of the gap is different at different points around the gap so that the gap has a minimum width at one point and from this point successively increases its width to the diametrically opposite point at which the gap is of maximum width. In a gasket having a connection part extending substantially perpendicular to the axis of the gasket a force acting on the gasket when the sealing surfaces are being assembled will subject the gasket to a force striving to rotate the profile of the gasket at least at some points thereof. It is possible to reduce and even solve this problem in a gasket having a connection part extending perpendicular to the axis of the gasket by increasing the dimension of the connection part in the axial direction of the gasket. However, an increased dimension in the axial direction of the gasket causes other drawbacks, such as reduced possibilities of adapting the sealing sleeve to different widths of the gap between the sealing surfaces. In a gasket of the type described in which the connection part extends substantially perpendicular to the axis of the gasket this can adapt to different widths of the gap only by a more or less high compression of the elastic material of the gasket in the radial direction of the profile thereof. Thus, the axial dimension of the connection part of a gasket according to DE-C-1 055 460 represents a compromise, i.e. said dimension shall be large so as to avoid rotation of the profile of the gasket when the sealing surfaces are being assembled while said dimension shall be small for facilitating the adaption of the gasket to different widths of the gap between the sealing surfaces.

In accordance with the present invention the problems of obviating a rotation of the profile of the gasket when the sealing surfaces are being assembled as well as the problem of adapting the gasket to gaps of different widths are solved by the fact that the gasket body has in cross-section a Z-type general configuration with the connection part extending obliquely from the point of attack of the sliding part to a supporting surface on an axially opposite edge of the attachment part at an angle of 45° or less in relation to the axially extending attachment part.

This Z-type configuration of the gasket including an obliquely extending connection part provides that the force acting on the gasket in the proximity of the point of attack when the sealing surfaces are being assembled does not subject the gasket to a force striving to rotate the profile of the gasket. In the gasket according to the present invention said force acts in the longitudinal direction of the connection part.

The gasket according to the present invention can adapt to different widths of the gap between the sealing surfaces by a translational movement of the sliding part in relation to the attachment part without any change of the compression of the connection part but only by a deflection thereof. This means that there are in a gasket according to the present invention no contradictory demands with regard to the dimensions of the connection part.

The invention is illustrated with reference to the drawings, in which,
Fig. 1 is a section through a first embodiment of the gasket,
Fig. 2 is an axial cross-section of a gasket mounted on a pipe,
Figs. 3 and 4 show views similar to Fig. 2 but after the insertion of a pipe,
Fig. 5 illustrates a method of manufacturing a socket,
Figs. 6a and 6b show a gasket mounted on a socket, and
Figs. 7-9 show an embodiment of gasket having a jacket.

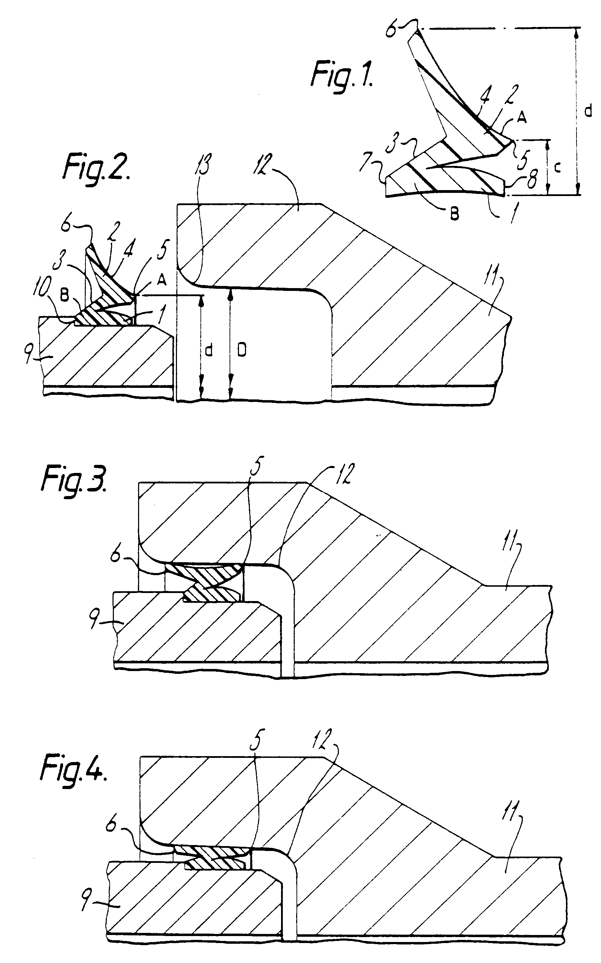

Fig. 1 is a section through a first embodiment of the gasket profile. This can be said to be constructed from three main elements. The attachment part 1, the sliding part 2 and an inclined connection part 3 therebetween.

The attachment part 1 can have a special shape, so that it matches a groove or similar, adapted thereto, but generally it will have a width which is substantially larger than the height, and it will preferably have a concave abutment side and the surfaces 7 and 8 with abrupt corners.

The sliding part 2 shall have a concave surface 4. The surface can be evenly curved or for example consist of several inclined surfaces. The end surfaces 5 and 6 should preferably define acute angles together with the surface 4 so as to provide outwardly protruding sealing lips. To facilitate the insertion of one of the sealing surface into the other, the sliding part has an inclined position relative to the attachment part 1, so that the gasket height c is substantially less than the gasket height d.

The connection part 3 is attached to the sliding part 2 at the front edge of the gasket, in the proximity of the poi nt of attack A and extends therefrom obliquely downwards toward the inner surface 7 of the attachment part 1 at an angle of 45⁰ or less. The twisting force which acts upon the gasket in the proximity of A, will then via the connection part 3 be directed towards the supporting surface and the limiting surface 7 of the attachment part 1, so that the gasket will be given a pivot point close to B, and the connection part 3 which has a greater length than the pivot radius, will act as a thrust bar and prevent rotation of the profile.

Fig. 2 is an axial cross-section of the gasket mounted on the spigot end of a pipe 9. For the fixing of the gasket on the pipe this can be provided with a step 10. Onto the pipe 9 there is pushed another pipe 11 having a socket 12. The socket 12 has a somewhat larger diameter D then the diameter d of the gasket and is additionally provided with a radius of entrance 13.

As the socket 12 is pushed onto the sliding part 2 of the gasket it will hit the inclined concave sliding surface 4 thereof. The connection part 3 has less sectional area than the attachment and sliding part 1 and 2, respectively, and the sliding part 2 will pivot thereabout close to the attachment point B, and since this point is ata maximum distance from the point of attack A, the efficiency of the pivoting movement which results in increased thickness will be at a maximum at the point of attack A. The sealing lips 5 and 6 will thereby be placed under sufficient sealing pressure even if the gap between the pipe 9 and the socket 12 is substantially larger than the nominal dimension thereof, as is illustrated in Fig. 3.

Due to its structure the gasket can also be used even if the gap between the sealing surfaces is substantially narrower than predicted. The approximate Z-shape of the profile will then, as illustrated in Fig. 4, be converted into a flat compressed Z-shape, substantially by bending the material, and the sealing pressure will therefore not increase above acceptable values.

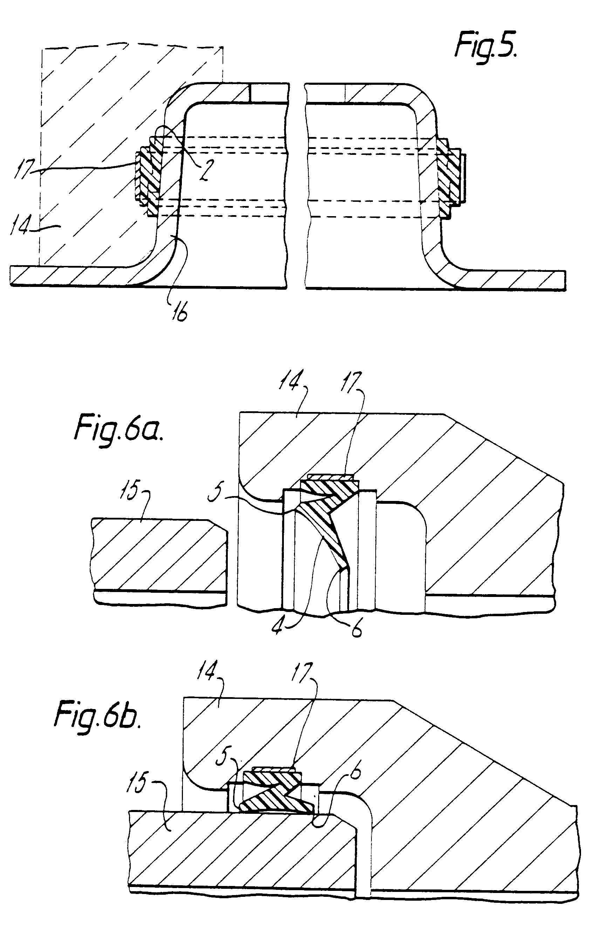

Of course the gasket can also be used having the attachment part fixedly connected to a socket 14, as illustrated in Fig. 6, in which the spigot end 15 is pushed into the gasket.

In Fig. 5, a method of manufacturing the socket of the pipe is illustrated in which the gasket is mounted and compressed on a construction mandrel 16 with its gliding part 2 in contact therewith, on the outside of which mandrel the socket 14 of the pipe thereafter is constructed. After cooling or curing the mandrel 16 is pulled out of the socket, whereby the gasket is released and takes the shape as illustrated in Fig. 6, the pipe then being ready for use. Since the gasket is to be used in such a sealing system, the gasket must be prevented from being stretched when being mounted outside the construction mandrel 16. The gasket must therefore be provided with a non-stretchable reinforcement 17. If this has a diameter which is adapted to the circumstances, the gasket will take a prestressed and compressed position as illustrated in Fig. 5. As previously described the gasket will then regain its original shape as soon as the construction mandrel 16 is removed.

In addition to its primary function (to compress the profile), the external reinforcement ring 17 also constitutes a substantial expedient for improving the pipe structure. Because the reinforcement is designed to absorb the maximum gasket pressure which can develop, the designer of the pipe need no longer take into consideration the uncertainty of what load this will exert on the socket.

The designer should therefore be able to reduce the dimensions of the materials considerably since he need only take into account the transverse forces and similar forces which influence the socket.

In use a gasket as illustrated in Fig. 1 must be provided with an appropriate lubricant on the surface 4 before assembly. To avoid this the gasket can be provided with a closed sliding jacket of the type described in U.S. Patent Specification No. 4 299 399. Such a closed jacket, during assembly, slides across the sliding surface of the gasket body and forms a double supporting layer in continuation of the gasket.

Especially when the gasket is mounted on a construction mandrel, it must be compressed strongly, which may be disadvantageous primarily because this may make it difficult to mount on the construction mandrel. In such a case it would be more convenient if the gasket could have its thickness of material increased, and thereby its compression during the assembly of the pipes.

If a relatively long assembly movement can be accepted and if also there is enough gap space inside the body of the gasket, such a gasket thickness can be achieved by increasing the thickness of the sliding jacket towards its connection to the gasket body. The long sockets necessary for achieving anything substantial by this approach are however frequently not wanted, and a substantially larger increase of thickness can be achieved by modification of the closed sliding jacket.

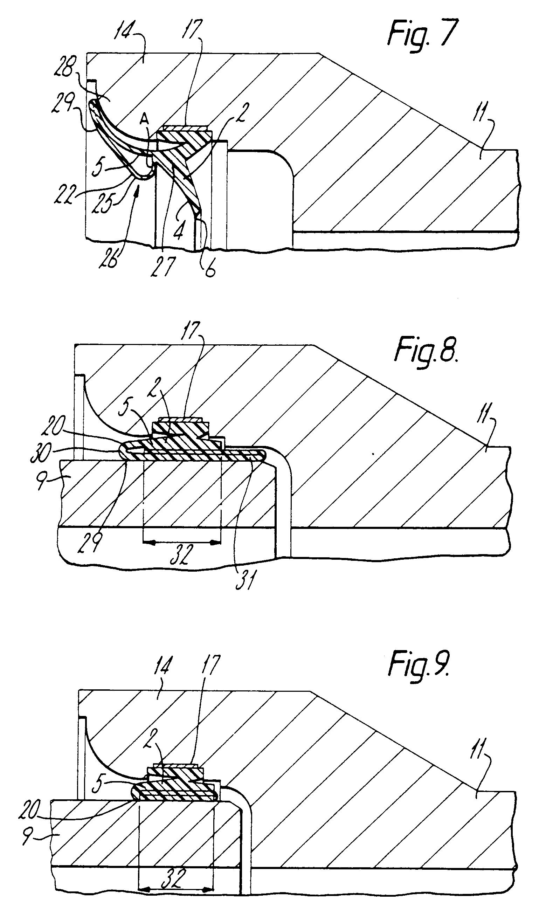

The sliding jacket 22, shown in Fig. 7, is provided with an increasing thickness, and is at its thickest end attached to the front side of the body, whereas the other end of the jacket 22, which preferably has a bulge 25, is attached to the point of attack A of the gasket body in such a manner that the bulge 25 obtains a diameter 26 which is less than the diameter27 of the gasket body. The largest width of the sliding jacket extends forwardly and outwards towards the socket opening 28. The inner surfaces 29 of the sliding jacket, which may be equipped with locking ribs, are in known manner provided with a suitable lubricant.

When the pipe 9 is pushed into the socket 14, it will hit the double sliding jacket 22 at the bulge 25 thereof, and this will follow the movement of the pipe inwardly along the gasket body 2, whereas the lubricated inner surfaces 29 will slide relative to each other, the jacket at the same time rolling across the gasket body and forming a double layer thereover. The thickness of the material and the compression will then increase corresponding to two jacket thickness dimensions in the sealing gap.

By adapting the width of the sliding jacket and the length of the assembly movement it is also possible to achieve a supporting layer 30-31, shown in Fig. 8, which may extend beyond the sealing width 32 in one or both directions. The jacket 22 may alternatively be of such a width that on being inserted by the pipe 9 a double jacket layer 20 forms only across the sealing width 32, so that the gasket can also be used even if no space is available inside the sealing gap, as illustrated in Fig. 9.

## Claims

1. A gasket for sealing the gap between two approximately parallel sealing surfaces, which during assembly are displaced axially relative to each other, such that the gasket follows one sealing surface and is compressed between the said one sealing surface and the other sealing surface, the gasket having a body made of a soft elastic material and comprising an annular sliding part (2) and an annular attachment part (1), the said parts (1, 2) being connected together by a connection part (3), the attachment part (1) extending substantially axially, and the sliding part (2) having a point of attack (A) at the front end of the gasket and being so inclined relative to the attachment part (1) that the edge of the sliding part (2) with the point of attack (A) is nearer to the attachment part (1) than is the remainder of the sliding part (2), characterized in that in cross-section, the gasket body has a Z-type general configuration with the connection part (3) extending obliquely from the point of attack (A) of the sliding part (2) to a supporting surface (7) on an axially opposite edge of the attachment part (1) at an angle of 45° or less in relation to the axially extending attachment part.

2. A gasket according to claim 1, characterized in that the sliding part (2) has a concave surface (4) facing out from the gasket body.

3. A gasket according to claim 1 or 2, characterized in that the attachment part (1) is connected to a reinforcement (17).

4. A gasket according to any preceding claim, characterized in that a closed sliding jacket (18) is attached to the sliding part (2) adjacent the point of attack (A) and is disposed to coverthe sliding surface (4) of the sliding part (2) in use.

5. A gasket according to claim 1 or 2, characterized in that the attachment part (1) is disposed within the sliding part (2).

## Patentansprüche

1. Dichtung für das Dichten eines Spaltes zwischen zwei zueinander annähernd parallelen Dichtflächen, welche beim Zusammenbau relativ zueinander axial versetzt werden, derart, daß die Dichtung einer Dichtfläche folgt und zwischen der einen Dichtfläche und der anderen Dichtfläche zusammengedrückt wird, welche Dichtung einen Körper besitzt, der aus weichelastischem Material besteht und einen ringförmigen Gleitteil (2) sowie einen ringförmigen Befestigungsteil (1) aufweist, wobei diese Teile (1, 2) mittels eines Verbindungsteils (3) miteinander verbunden sind, wobei sich der Befestigungsteil (1) im wesentlich axial erstreckt und der Gleitteil (2) einen Angriffspunkt (A) am vorderen Ende der Dichtung aufweist und relativ gegen den Befestigungsteil (1) so geneigt ist, daß die Kante des Gleitteils (2) mit dem Angriffspunkt (A) dem Befestigungsteil (1) näher liegt als der übrige Bereich des Gleitteils (2), dadurch gekennzeichnet, daß der Dichtungskörper im Querschnitt im wesentlichen eine Z-förmige Konstruktion besitzt, wobei der Verbindungsteil (3) vom Angriffspunkt (A) des Gleitteils (2) schräg zu einer Abstützfläche (7) an einer axial entgegengesetzten Kante des Befestigungsteils (1) mit einem Winkel von 45° oder weniger in bezug auf den sich axial erstreckenden Befestigungsteil verläuft.

2. Dichtung nach Anspruch 1, dadurch gekennzeichnet, daß der Gleitteil (2) eine vom Dichtungskörper nach außen gekehrte konkave Fläche (4) aufweist.

3. Dichtung nach Anspruch 1 oder 2, dadurch gekennzeichnet, daß der Befestigungsteil (1) mit einer Verstärkung (17) verbunden ist.

4. Dichtung nach einem der vorhergehenden Ansprüche, dadurch gekennzeichnet, daß am Gleitteil (2) benachbart dem Angriffspunkt (A) ein geschlossener Gleitmantel (22) angehängt und dazu bestimmt ist, in der Verwendung die Gleitfläche (4) des Gleitteils (2) zu bedecken.

5. Dichtung nach Anspruch 1 oder 2, dadurch gekennzeichnet, daß der Befestigungsteil (1) innerhalb des Gleitteils (2) angeordnet ist.

## Revendications

1. Joint d'étanchéité pour boucher l'interstice entre deux surfaces d'étanchéité approximativement parallèles qui se déplacent axialement l'une par rapport à l'autre, de telle sorte que le joint suive l'une des surfaces d'étanchéité et soit comprimé entre cette surface d'étanchéité et l'autre surface d'étanchéité, le joint comportant un corps en une matière élastique tendre et comprenant une partie coulissante annulaire (2) et une partie de fixation annulaire (1), lesdites parties (1, 2) étant reliées l'une à l'autre par une partie de jonction (3), la partie de fixation (1) s'étendant sensiblement axialement, et la partie coulissante (2) ayant un point d'attaque (A) à l'extrémité avant du joint et étant inclinée de façon telle par rapport à la partie de fixation (1) que le bord de la partie coulissante (2) avec le point d'attaque (A) se trouve plus près de la partie de fixation (1) que le restant de la partie coulissante (2), caractérisé en ce qu'en coupe transversale, le corps du joint a une configuration générale du type en Z avec la partie de jonction (3) s'étendant obliquement depuis le point d'attaque (A) de la partie coulissante (2) jusqu'à une surface d'appui (7) sur un bord axialement opposé de la partie de fixation (1) suivant un angle de 45° ou d'une valeur inférieure par rapport à la partie de fixation s'étendant axialement.

2. Joint d'étanchéité selon la revendication 1, caractérisé en ce que la partie coulissante (2) a une face concave (4) dirigée vers l'extérieur du corps du joint.

3. Joint d'étanchéité selon la revendication 1 ou 2, caractérisé en ce que la partie de fixation (1) est reliée à un renfort (17).

4. Joint d'étanchéité selon l'une quelconque des revendications précédentes, caractérisé en ce qu'une chemise coulissante fermée (18) est attachée à la partie coulissante (2) près du point d'attaque (A) et est placée pour couvrir en service la surface de coulissement (4) de la partie coulissante (2).

5. Joint d'étanchéité selon la revendication 1 ou 2, caractérisé en ce que la partie de fixation (1) est placée à l'intérieur de la partie coulissante (2).
